Europäisches Patentamt

European Patent Office

Office européen des brevets

(11) Publication number: **0 301 532**
**A2**

# (12) EUROPEAN PATENT APPLICATION

(21) Application number: **88112198.2**

(22) Date of filing: **29.07.88**

(51) Int. Cl.⁴: **C08F 20/06**

(30) Priority: **30.07.87 US 79321**

(43) Date of publication of application:
**01.02.89 Bulletin 89/05**

(84) Designated Contracting States:
**BE CH DE FR GB IT LI NL**

(71) Applicant: **The B.F. Goodrich Company**
**3925 Embassy Parkway**
**Akron Ohio 44313(US)**

(72) Inventor: **Herbert, Mark Wayne**
**3248 Valley Forge Drive**
**Brunswick Ohio 44212(US)**
Inventor: **Huvard, Gary Stephen**
**106 North Hairpin Drive**
**Quinton, Virg. 23141(US)**

(74) Representative: **von Kreisler, Alek et al**
**Patentanwälte Von**
**Kreisler-Selting-Werner-Schönwald-Fues-Da-**
**llmeyer Deichmannhaus**
**D-5000 Köln 1(DE)**

(54) **Solvent free acrylic acid type thickening agents and a method of making same.**

(57) A copolymer having no (zero) organic solvent is suitable for use as a thickening agent comprising an acrylic acid polymer crosslinked with from about 0.1 to about 6% by weight, based upon the weight of the acrylic acid polymer, of a copolymer, the copolymer having at least two terminal allyl groups. The copolymer at a 0.2 weight percent level dispersed in distilled water has a mucilage viscosity of at least 1000 cps. A method for making a solvent-free copolymer suitable as a thickening agent is also disclosed which comprises the steps of:

    a) charging into a reactor acrylic acid monomer, a comonomer, carbon dioxide, and a chemical initiator;

    b) polymerizing the acrylic acid monomer with the comonomer at a preselected temperature and pressure to produce a fine, fluffy acrylic acid copolymer; and

    c) separating totally and completely the acrylic acid copolymer from the carbon dioxide thus producing an organic solvent-free acrylic acid polymer. The amount of chemical initiator employed in the method ranges from about 0.25% to about 4% by weight based upon the weight of the acrylic acid.

EP 0 301 532 A2

# SOLVENT FREE ACRYLIC ACID TYPE THICKENING AGENTS AND A METHOD OF MAKING SAME

## BACKGROUND OF THE INVENTION

### 1) Field of the Invention

The present invention relates to a thickening agent consisting essentially of acrylic acid copolymers. In particular, the present invention relates to copolymerizing acrylic acid with one or more multifunctional acrylic or allylic monomers to produce a solvent free thickening agent polymer.

### 2) Prior Art

A number of synthetic polymers require the use of a non-aqueous polymerization medium. In such instances, organic solvents are often employed as the polymerization medium. For example, certain acrylic acid copolymers useful as thickening agents are commercially made using an organic solvent polymerization medium. Exemplary of such prior art are U.S. Patent 2,798,053 to Brown; U.S. Patent 3,915,921 to Schlatzer, Jr.; and U.S. Patent 4,509,949 to Huang et al.

There are certain applications for thickening agents where the acrylic acid polymer cannot contain any residual organic solvents. In particular, while certain acrylic acid monomers have been successfully polymerized in organic solvents such as benzene or methylene chloride, as exemplified by the above U.S. patents, use of these polymers in food or pharmaceutical applications require extremely low (or no (zero)) residual solvent levels. Removal of organic solvents from polymers is both difficult and costly. Although organic solvent residuals can be reduced to very low levels, complete removal cannot be accomplished once the polymer has been exposed to and in contact with the solvent. Accordingly, there is a great need for an acrylic acid copolymer thickening agent having no (zero) residual organic solvent. Additionally, there is a need for a method of making such an acrylic acid copolymer having no (zero) residual organic solvent.

In order to achieve the above aims, it would be desirable to employ as a polymerization medium a non-aqueous diluent or a non-organic solvent. These limitations greatly hinder the search for a useful polymerization medium. The use of carbon dioxide ($CO_2$) has been proposed as a polymerization medium for vinyl compounds. Exemplary thereof is French Patent 1,524,533 issued to Sumitomo Chemical Company, Ltd. The large class of vinyl compounds set forth in the French patent is useful as "indispensable raw materials for industry." The polymers set forth therein include acrylic acid. However, when employing carbon dioxide as the polymerization medium for polymerizing acrylic acid, under the conditions set forth in the patent, small chunks of hard polymer were obtained which were totally unsatisfactory when employed as thickening agents. The resultant polymer obtained using an organic solvent, under the conditions set forth in the above mentioned patents to Brown; Schlatzer, Jr.; and Huang et al. is a fine fluffy powder suitable for use as a thickening agent.

Because the polymer obtained under the French process can't be employed as a thickening agent, a need exists with respect to acrylic acid copolymers for making a suitable fine fluffy powder useful as a thickening agent having no (zero) residual solvent.

## SUMMARY OF THE INVENTION

The present invention produces a fine fluffy powder acrylic acid copolymer useful as a thickening agent by employing a non-aqueous, non-organic solvent polymerization medium. Specifically, the present invention produces a fine fluffy powder acrylic acid copolymer using carbon dioxide as the polymerization medium. In order to obtain a fluffy powder acrylic acid copolymer useful as a thickening agent, it is necessary to recognize the importance of the phase behavior of acrylic acid/carbon dioxide mixtures. If the pressure, temperature, and composition of an acrylic acid/carbon dioxide mixture are such that polymerization occurs in a single, homogeneous supercritical fluid phase or such that polymerization occurs in a liquid

2

phase having a composition less than 25 weight percent acrylic acid, then a fine fluffy polymer powder suitable as a thickening agent can be produced. To the contrary, should the pressure, temperature, and composition of acrylic acid/carbon dioxide mixture be such that separation of the mixture occurs wherein one of the phases formed contains the acrylic acid at a composition higher than 25 weight percent, then chunky, hard polymer unsuitable as thickening agent is produced. Whenever the pressure, temperature, and composition are at conditions under which a fine, fluffy polymer will form, it is also necessary that the multifunctional acrylic or allylic comonomer be uniformly distributed in the phase in which polymerization occurs. Moreover, whenever the pressure, temperature, and composition are at conditions under which a fine, fluffy polymer will form, it is also necessary that the chemical employed to initiate the polymerization be uniformly distributed in the phase in which polymerization occurs.

Whenever the pressure, temperature, and composition are such to yield conditions under which a chunky, hard polymer is formed, the polymer will be unsuitable as a thickening agent even if it is ground to a fine powder similar to that obtained by proper polymerization. Accordingly, it is the inventors' belief that the chemical structure of the fine fluffy powder of the acrylic acid copolymer is different from that of the hard, chunky copolymer.

As noted above, polymerization can be effected in carbon dioxide to yield fine fluffy powders when the acrylic acid, comonomer and chemical initiator are dissolved in a single liquid phase such that the acrylic acid composition remains below 25 weight percent. Such a condition can be most easily obtained by operating below 31°C, the critical point of carbon dioxide, such that carbon dioxide is capable of condensing to the liquid state. When employing a liquid phase polymerization, the amount of chemical initiator required is generally greater than that required for a supercritical fluid phase polymerization. Despite the fact that more chemical initiator is employed at lower temperatures, the reaction time necessary to achieve yields comparable to those obtained in a supercritical fluid phase polymerization is much longer. Regardless of what type of phase behavior is used for the polymerization, the carbon dioxide employed is easily removed from the resultant fine polymer powder.

In the broadest sense, the present invention pertains to fine fluffy powder acrylic acid copolymers suitable as thickening agents produced by copolymerizing acrylic acid with one or more multifunctional acrylic or allylic monomers in the presence of carbon dioxide. The pressure, temperature, and composition are chosen so as to effect the polymerization in either a single, homogeneous supercritical fluid phase mixture, or in a liquid phase mixture containing less than 25 weight percent acrylic acid. After polymerization, the carbon dioxide is separated from the polymer and the polymer will contain no (zero) residual organic solvents.

## BRIEF DESCRIPTION OF THE DRAWINGS

Other aims and advantages of the present invention will become apparent upon reading the following detailed description and upon reference to the drawings, in which:

Figure 1 is a three dimensional schematic representation of the phase behavior of acrylic acid/carbon dioxide mixtures; and

Figure 2 is a plot of the actual phase behavior near the mixture critical points for acrylic acid/carbon dioxide mixtures at 45°C, 65°C, and 85°C.

## DESCRIPTION OF THE PREFERRED EMBODIMENTS

A mixture of acrylic acid, carbon dioxide, one or more multifunctional acrylic or allylic monomers, and a chemical initiator is used to prepare organic solvent free, fine fluffy copolymers useful as thickening agents. The choice of polymerization conditions (pressure, temperature, and composition) necessary to produce fine fluffy powder acrylic acid copolymers suitable as thickening agents, is governed by the phase behavior of the polymerization mixture. By copolymer it is meant a product produced by the simultaneous polymerization of two or more dissimilar monomers.

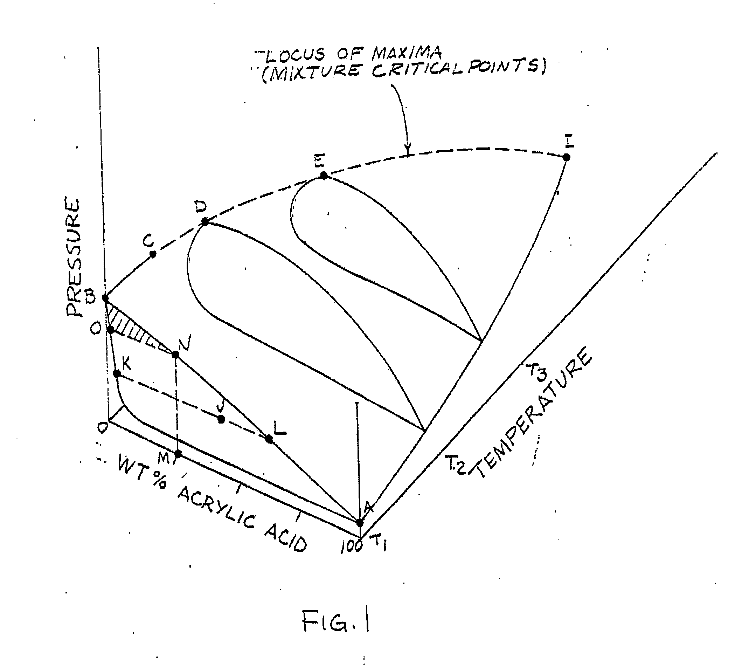

Figure 1 shows a three dimensional schematic representation of the phase behavior of acrylic acid/carbon dioxide mixtures. The temperature, $T_1$, represents a temperature that is below the critical point of pure carbon dioxide, i.e., below 31°C. Point C on the plot represents the critical point of carbon dioxide so that curve BC represents the variation of the vapor pressure of pure carbon dioxide with temperature.

3

This curve ends at point C which has a temperature coordinate of 31° C. Above 31° C pure carbon dioxide will not condense to a liquid state of aggregation regardless of the pressure applied. It becomes instead a "supercritical fluid" which has both liquid-like and gas-like properties without being either. Such behavior is well known.

Likewise, the curve AI of Figure 1 represents the variation of the vapor pressure of pure acrylic acid. This curve ends at point I which represents the critical point of pure acrylic acid. Points D and E on Figure 1 represent "mixture critical points" at the temperatures $T_2$ and $T_3$ which are both above 31° C.

At any specific temperature, the enclosed area such as that shown in Figure 1 at $T·$, $T_2$, or $T_3$ are termed the "phase envelopes". A single gas phase region at a temperature below 31° C is represented by the area enclosed below the phase boundary line which includes points B and A. Copolymerization, however, cannot be carried out in such a gaseous mixture as the comonomer (0.1-6 weight percent based on the acrylic acid) and/or the chemical initiator (0.25-4 weight percent based on acrylic acid) will not be soluble in the gas phase and therefore, a fine fluffy copolymer useful as a thickening agent cannot be made. Above this phase envelope (i.e. above curve BNLA), a single, homogeneous liquid phase exists. While polymerizations may be successfully carried out in this region, such conditions are generally unpractical in practice since this region represents perfectly hydrofull conditions in a polymerization vessel. By hydrofull it is meant that liquid fills the entire vessel volume such that there is no vapor space.

Any pressure/composition combination that falls within the phase enveloped above curve BNLAK will exhibit two phase behavior. A mixture having a total composition corresponding to point J on the graph will exist as two phases, one a gas phase with a composition corresponding to point K and the other a liquid phase with a composition corresponding to point L. So long as the comonomer and chemical initiator are soluble in the liquid acrylic acid/carbon dioxide phase, it is possible to effect copolymerization. So long as the weight percent of acrylic acid in the liquid phase remains below 25 weight percent of that phase, it is possible to effect copolymerization to give fine fluffy powders. If the concentration of acrylic acid in that liquid phase increases above 25 weight percent hard, chunky polymer unsuitable as thickening agents may be produced.

In practice, it is possible to maintain the composition of the liquid phase in the proper range by operating at pressure/composition points that fall within the shaded area portion of the phase envelope between points N and B. Because the exact shape of the phase envelope changes with temperature, the exact boundaries of the desired operating region (at temperatures below 31° C) will also change. However, at any given temperature below 31° C the region can be defined by plotting the phase envelope, drawing a line vertically from a point corresponding to 25 weight percent on the acrylic acid axis (point M) until it intersects the upper phase boundary (point N on curve BNLA), and then drawing a line horizontally from that point of intersection such that the horizontal line intersects the lower phase boundary (point O on curve BNLAK). Any mixture composition that falls within a region of the phase diagram so defined will separate into two phases, one gaseous and one liquid, such that the liquid phase will contain less than 25 weight percent acrylic acid. So long as the comonomer (0.1-6 weight percent based on the acrylic acid) and the chemical initiator (0.25-4 weight percent based on the acrylic acid) are also soluble in the liquid phase, fine fluffy powder acrylic acid copolymers suitable as thickening agents may be produced.

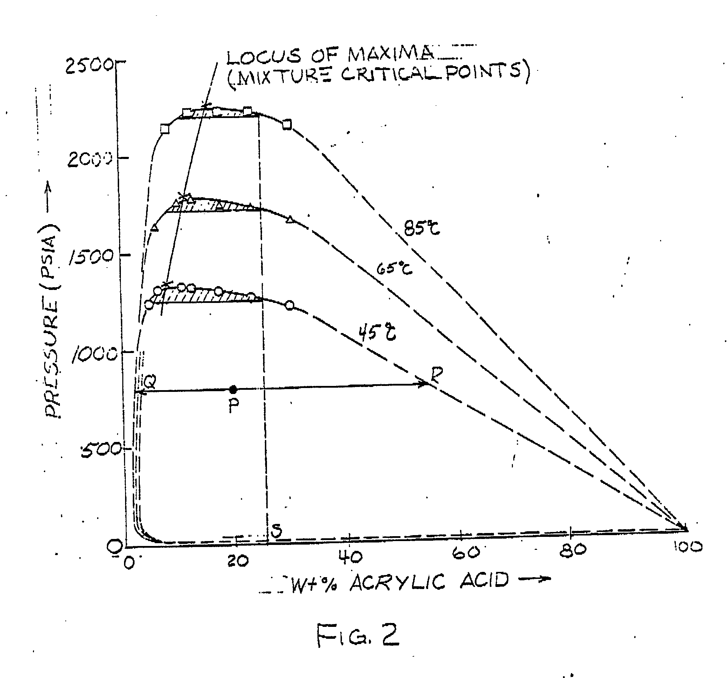

Below 31° C, the preferred embodiment of the invention is the selection of pressure, temperature, and composition such that: 1) polymerization takes place in a liquid phase containing no greater than 25 weight percent acrylic acid, said pressure and composition defined according to the phase behavior at a given temperature below 31° C as described above, and 2) comonomers (0.1-6 weight percent based on acrylic acid) and chemical initiators (0.25-4 weight percent based on acrylic acid) are also soluble in the liquid phase in which polymerization is to occur. Above 31° C, similar phase envelopes exist save they do not intersect the plane of temperature and pressure for pure carbon dioxide (zero acrylic acid). Such "supercritical phase envelopes" for acrylic acid/carbon dioxide mixtures are shown in Figure 2 for temperatures of 45° C, 65° C, and 85° C. Data showing the upper phase boundary for each temperature is plotted and dashed lines show the expected extrapolation of these data to define the phase envelopes. The maximum pressure point on each phase boundary is termed the mixture critical point and the line through these points gives the locus of maxima as shown schematically in Figure 1. At a given temperature above 31° C, any pressure/composition combination that falls below the phase envelope will exist as a single homogeneous supercritical fluid phase. For the case of acrylic acid/carbon dioxide mixtures, the density of such a phase is far too low to solubilize the necessary amounts of comonomers and chemical initiator. As a result, polymerizations to produce fine fluffy acrylic acid copolymers suitable as thickening agents cannot be carried out effectively. To the left of the phase envelopes, as viewed in Figure 2, all pressure/composition combinations will also exist as single, homogeneous supercritical fluid phases. In this region, the ability of the supercritical fluid phase mixture to solubilize the necessary amounts of comonomers and chemical initiators increases with increasing pressure and polymerizations may, in principle, be carried out to produce the desired fine, fluffy powders. However, the total acrylic acid composition of such mixtures must remain below about 5 weight percent acrylic acid as shown in Figure 2, thereby limiting the commercial productivity of a polymerization reactor operating in this region.

Any pressure/composition combination that falls within the phase envelope at a given temperature will separate into two phases, one a liquid and one a supercritical fluid phase. A mixture at 45° C having pressure and composition corresponding to point P in Figure 2 will separate into a liquid phase with composition corresponding to point R and a supercritical fluid phase corresponding to point Q. The liquid phase will contain and may solubilize the necessary amounts of comonomers and chemical initiator, however, if it contains greater than 25 weight percent acrylic acid, hard, chunky polymer unsuitable for use as a thickening agent will be produced. If the liquid phase contains less than 25 weight percent acrylic acid, and if the necessary amounts of comonomers and chemical initiator are solubilized in this liquid phase, then fine fluffy acrylic acid copolymers suitable for use as thickening agents can be produced. As for the situation below 31° C, we may define regions of preferred operation by drawing the phase envelope, extending a vertical line from the acrylic acid axis corresponding to 25 weight percent (point S) until it intersects the upper phase boundary, and extending a horizontal line from that intersection until the line intersects the lower (here almost vertical) phase boundary. Such regions at 45° C, 65° C, and 85° C have been shaded in Figure 2.

At any pressure/composition combination above the upper phase envelope boundary but below the critical mixture point (i.e. to the right of the phase envelope), the mixture will exist as a single, homogeneous "expanded liquid" phase. So long as the density of such a supercritical fluid phase is sufficient to solubilize the necessary amounts of comonomers and chemical initiators, it is feasible, in principle, to begin a polymerization but it is expected that hard, chunky polymer will form due to the high concentration of acrylic acid. Moreover, if such a polymerization continues at nearly constant pressure, depletion of the monomer to form polymer will result in the acrylic acid content of the supercritical fluid phase to decrease to the point that the phase boundary is crossed. At this point, phase separation will occur and a liquid phase containing greater than 25 weight percent acrylic acid will form. Thus, acrylic acid copolymers unsuitable for use as thickening agents can form thereby limiting the usefulness of this operating region of the phase behavior.

At any pressure above the mixture critical pressure at a given temperature, the mixture will exist as a single, homogeneous supercritical fluid phase. Unlike its liquid analog below 31° C, however, this phase is very compressible and is readily attainable in practice. In this region, there does not appear to be an upper limit on the useful weight percent of acrylic acid used. In practice, the higher rates of polymerization encountered at greater than 25 weight percent acrylic acid cause temperature control problems and limit the commercial usefulness of such high acrylic acid concentrations.

In the preferred embodiment of the invention, the temperatures greater than 31° C, pressure/composition combinations are chosen such that between 5 and 25 weight percent of acrylic acid is present, the pressure is from within the region defined by shading as described above to well over the mixture critical pressure, and the polymerization mixture, whether a liquid (within the shaded region) or a supercritical fluid mixture (above the mixture critical pressure) is capable of solubilizing the necessary amounts of comonomers and chemical initiator. Given these conditions, fine fluffy acrylic acid copolymers can be produced which are suitable for use as thickening agents.

Whether polymerized above or below 31° C, according to the preferred conditions described, the fine fluffy powder acrylic acid copolymers may be easily separated from the carbon dioxide employed and will contain no (zero) residual organic solvents.

As demonstrated by the following Examples, the carbon dioxide employed in the polymerization reaction should be at least 99% by volume pure. The Examples demonstrate the use of COM grade, i.e., a commercial grade where impurities comprise about 5,000 parts per million (ppm); ANAR grade, i.e., anaerobic grade where impurities comprise about 100 ppm; Cole grade, i.e., Coleman grade having 100 ppm impurities; RID grade, i.e., carbon dioxide stripped of oxygen using "RIDOX"® catalytic oxygen remover and having about 80 ppm impurities; or mixtures of the above grades.

A small amount of oxygen (1-20 ppm) in the carbon dioxide is useful to inhibit polymerization while the reactor is charged with carbon dioxide and brought to the desired pressure and temperature. With a small amount of oxygen, a short induction period is observed until the oxygen is consumed by the chemical initiator whereupon polymerization begins. Excess oxygen (above 1-20 ppm) is not harmful to the production of fine fluffy powders but causes excessively long induction periods thereby limiting the productivity of the reactor.

In the preferred embodiment of the invention, a crosslinking comonomer is added at from 0.1 to 6% by weight of the acrylic acid. If more than 6% by weight of crosslinking comonomer is incorporated into the copolymer, the copolymer does not perform well as a thickening agent. Likewise, if no crosslinking comonomer is incorporated into the copolymer, the copolymer does not perform well as a thickening agent.

The crosslinking comonomers which may be employed, singly or in combination, may be any compound, not necessarily monomeric in nature, containing two or more terminal polymerizable acrylic or allylic groups per molecule. As noted above, any such comonomers are preferred to have sufficient solubility in the reaction mixture that they are easily incorporated into the copolymer during the polymerization. Examples of compounds which might be usefully employed as crosslinking comonomers include polyunsaturated-hydrocrabons, -polyethers, -polyesters, -nitriles, -acids, -acid anhydrides, -ketones, -alcohols and polyunsaturated compounds of this class incorporating one or more of these and other functional groups. Specifically, there may be utilized divinyl benzene, divinyl naphthalene, low-molecular weight and soluble polymerized dienes, such as polybutadiene and other soluble homopolymers of open chain aliphatic conjugated dienes, which soluble polymers do not contain any appreciable number of conjugated double bonds, and other polyunsaturated hydrocarbons; polyunsaturated esters, ester-amides and other ester derivatives, such as ethylene glycol, diacrylate, ethylene glycol dimethacrylate, allyl acrylate, methylene bisacrylamide, methylene bismethacrylamide. triacrylyl triazine, hexallyl trimethylene trisulfone and many others; polyunsaturated ethers, such as divinyl ether, diallyl ether, dimethyl allyl ether, diallyl ethylene glycol ether, diallyl, triallyl and other polyallyl ethers of glycerol, butene-1,2-diol, 1-phenyl-1,2,3-propanetriol, the polyallyl, -vinyl and -crotyl polyethers containing from two to seven or more of these or other alkenyl ether groupings per molecule and made from polyhydric alcohols, such as the carbohydrate sugars, and the so-called "sugar alcohols", including erythritol, pentaerythritol, arabitol, iditol. mannitol, sorbitol, inositol, raffinose, glycose, sucrose, and many others, and other polyhydroxy carbohydrate derivatives, the corresponding polyalkenyl silanes, such as the vinyl and ally silanes; and the like. Of this large class of crosslinking agents, the polyalkenyl polyethers of the carbohydrate sugars, sugar alcohols and other polyhydroxy carbohydrate type derivatives containing from two to seven alkenyl ether groups per molecule are particularly useful. Such materials are easily prepared by a Williamson-type synthesis involving the reaction of an alkenyl halide, such as allyl chloride, allyl bromide, methallyl chloride, crotyl chloride, and the like, with a strongly alkaline solution of one or more of the polyhydroxy carbohydrate derivatives.

In the monomeric mixture, two essential monomeric materials should be present in certain proportions, although the exact proportions will vary considerably depending on the characteristics desired in the polymer. Small amounts of the polyalkenyl polyether copolymerize quite readily with acrylic acid and the crosslinking effect of the polyalkenyl polyether on the carboxylic monomer is so strong that as little as 0.1% by weight thereof, based on the weight of the acrylic acid can produce a great reduction in the water and solvent-solubility of the resulting crosslinked polymer. When 0.1% to 6.0%, more preferably 0.20% to 2.5%, by weight of the polyether is utilized, water-insoluble polymers are obtained which are extremely water sensitive.

Suitable for use as additional monomers in the production of multi-component interpolymers are monoolefinic vinylidene monomers containing one terminal $CH_2 = C\!\!<$ group, such as styrene, the chloro and ethoxy-styrenes, etc., acrylamide, N-methyl-acrylamide, N,N-dimethyl acrylamide, acrylonitrile, methacrylonitrile, methyl acrylate, ethyl acrylate, 2-ethylhexylacrylate, methyl methacrylate, vinyl acetate, vinyl benzoate, vinyl pyridine, vinyl chloride, vinylidene chloride, vinylidene chlorobromide, vinyl carbazole, vinyl pyrrolidone, methyl vinyl ether, ethyl vinyl ether, n-butyl vinyl ether, methyl vinyl ketone, ethylene, isobutylene, dimethyl maleate, diethyl maleate, and many others. In addition to the above monoolefinic monomers, many of the divinyl dialkenyl or other polyfunctional esters, amides, ethers, ketones, and the like, may be used in the production of multi-component interpolymers, especially those polyfunctional monomers which nominally function as crosslinking or insolubilizing monomers but which are easily saponified and hydrolyzed to additional hydroxy, carboxyl and other hydrophilic groups. For example, an interpolymer of acrylic acid and divinyl ether is insoluble in water but upon standing gradually goes into solution probably due to hydrolysis and breaking of divinyl ether crosslinks. The presence of strong alkali or acid speeds dissolution. Spectroscopic analysis confirms the presence in the polymers of non-carboxylic hydroxyls. Similarly, diesters, such as diallyl maleate, ethylene glycol dimethacrylate, acrylic anhydride, betaallyloxy acrylate, and many others, are readily saponified or hydrolyzed by alkali or acid with the introduction of additional monomers, N-methyl acrylamide, methyl vinyl ether, ethyl vinyl ether and divinyl ether have been found particularly useful in the production of the substantially unneutralized crosslinked interpolymers for use as substantially water-insoluble dispersants in the suspension polymerization of vinyl monomers.

The monomer-soluble or oil-soluble initiators that may be used in the polymerization process of the invention are the alkanoyl, aroyl, alkaroyl and aralkanoyl diperoxides and monohydroperoxides, azo compounds, peroxy esters, percarbonates, and other free radical initiators. As noted above, any such chemical initiators are preferred to have sufficient solubility in the reacting phase that they are readily available to initiate polymerization. As examples of such catalysts, there may be named benzoyl peroxide, lauroyl peroxide, diacetyl peroxide, cumene hydroperoxides, methyl ethyl ketone peroxide diisopropylbenzene hydroperoxide, 2,4-dichlorobenzoyl peroxide, naphthoyl peroxide, t-butyl perbenzoate, di-t-butyl perphthalate, isopropyl percarbonate, acetyl cyclohexane sulfonyl peroxide, disecondary butyl peroxydicarbonate, 5-butyl peroxyneodecanoate, di-normal propyl peroxydicarbonate, azobis isobutyronitrile, $\alpha,\alpha'$-azodiisobutyrate, $2,2'$-azobis-(2,4-dimethyl valeronitrile), and many others. The particular free radical catalyst employed will depend upon the molecular weight and color requirements of the polymer, the temperature of polymerization, etc. Insofar as the amount of catalyst employed is concerned, it has been found that an amount in the range of about 0.005 parts by weight to about 150 parts by weight, based on 100 parts by weight of the monomer or monomers being polymerized, is satisfactory. However, it is preferred to employ an amount of initiator in the range of about 0.25% to about 4.0% by weight based on the weight of acrylic acid.

The various components, namely acrylic acid, multifunctional comonomer (crosslinker), chemical initiator, and carbon dioxide, can be charged into a reactor either batch or semi-batch wise or, in principle, continuously. In a batch reaction, the monomer, comonomer, and chemical initiator are charged first. Carbon dioxide is added, the reactor temperature adjusted, and more carbon dioxide is added with mild agitation until the desired initial pressure is obtained. Properly carried out, no polymerization occurs during these steps due to the inclusion of the small amount of oxygen with the carbon dioxide as previously described. After a short induction period, 20-60 minutes, polymerization begins. The total polymerization time is from about 2 to about 24 hours depending on which and how much initiator is used and the temperature (chosen from the range of about 25° C to about 125° C).

The polymerization may also be run in a semi-batch mode wherein only a portion of the monomer and/or comonomer and/or chemical initiator are initially charged. The remaining portion of the ingredients is added after polymerization begins and, by varying the quantity and interval of additions, the properties of the fine, fluffy powder thickening agent may be altered.

After the polymerization is completed, the polymer is easily recovered by allowing the carbon dioxide to vent from the reaction mixture. This may be accomplished by simply venting the reactor to a suitable carbon dioxide recovery system, or by first removing the entire charge from the reactor to a second vessel before venting the carbon dioxide. Properly done, separation of the carbon dioxide leaves a fine, fluffy polymer powder that requires no other finishing steps and that contains no (zero) residual organic solvent.

## EXAMPLE I

Example I illustrates the effect of pressure on the ability to produce fine fluffy powder acrylic acid copolymers. At the same overall composition, those reactions run at pressures above the mixture critical points yield fine fluffy powders. Well below the mixture critical point (and below the shaded portion of the two phase region shown in Figure 2), hard, chunky polymer is formed.

The usefulness of an acrylic acid copolymer as a thickening agent is most easily determined by preparing a "mucilage" of the polymer and then determining the viscosity of the mucilage using standard techniques (in this case, Brookfield viscometry). To prepare the mucilages, 0.2 weight percent of the copolymer is dispersed and swollen in distilled water. A pH probe is inserted into this dispersion and a solution of sodium hydroxide is added with stirring until a pH of 8 is obtained. The dispersion develops high viscosity with neutralization and may be immediately tested for viscosity after being neutralized. At 0.2 weight percent of the polymer, a mucilage viscosity below 1,000 centipoise (cps) signifies a poor thickening agent. Between 1,000 and 2,000 cps , the polymer thickening efficiency is somewhat useful but not particularly desirable. Mucilage viscosities above 2,000 cps signify sufficiently good thickening efficiencies to have commercial utility.

In Example I, data for batch polymerizations run at 45° C and 65° C are reported. Allyl pentaerythritol crosslinker was used at a level of either 1/2 part or 1 part by weight of acrylic acid. The pressure was adjusted to a level either well above or well below the upper critical phase boundary at a given temperature to observe the effect of polymerization in a uniform supercritical fluid phase as opposed to polymerization in a liquid phase having too high an acrylic acid composition. At a given temperature, the overall weight percent of acrylic acid was held constant (8.4 wt% at 45° C and 65° C, and 9.4 wt% at 55° C). At each temperature, fine fluffy powder copolymers useful as thickening agents were obtained as set forth in Table I.

In this and other tables, reaction yields are reported based on the amount of polymer collected after the experiment. In cases where fine fluffy powders were obtained, significant amounts of polymer were lost during transfer from the reactor due to handling difficulties (such powders are quite dusty). This results in reported yields in the range of 70-85% even though it was apparent that virtually all of the acrylic acid monomer (99% +) had in fact reacted.

As shown in Figure 2, the mixture critical pressure for acrylic acid/carbon dioxide at 45° C is approximately 1250 psia. The lower pressure boundary of the shaded portion of the two phase region at 45° C is approximately 1200 psia. As shown in Table I, polymerizations run at pressures above 1200 psia yield fine fluffy powder copolymers showing useful thickening properties. At 1160 psia (just below the shaded region), hard, chunky (or gritty) polymer was obtained that showed very poor mucilage viscosity properties. Dashed entries in the table signify that essentially zero viscosity enhancement over distilled water was observed. Similar results were obtained at 55° C and 65° C. Above the mixture critical pressure at the polymerization temperature, fine fluffy powders were obtained; within the two phase envelope below the shaded region of the envelope, hard copolymers unsuitable as thickening agents were obtained.

Table I

| COMMENTS | WT. % AA | MONOMER | RXN °C | RXN PRESS | CROSSLINKER | | COL GRADE | RXN HOURS | % YIELD | CATALYST | | MUCILAGE VISCOSITY |
|---|---|---|---|---|---|---|---|---|---|---|---|---|
| | | | | | TYPE | PHRM | | | | TYPE | PHRM | 0.2 WT. % |
| 45°C | | | | | | | | | | | | |
| Comp. Fluff | 8.4 | AA | 45 | 3,300 | APE | 1.0 | ANAR/RIDOX | 6.0 | 78.2 | EHP | .5 | 3,650 |
| Fluff | 8.4 | AA | 45 | 2,500 | APE | 1.0 | ANAR/RIDOX | 6.0 | 79.1 | EHP | .5 | 4,450 |
| Fluff | 8.4 | AA | 45 | 1,500 | APE | 1.0 | ANAR/RIDOX | 6.0 | 83.6 | EHP | .5 | 4,150 |
| Hard Polymer | 8.4 | AA | 45 | 1,100 | APE | 1.0 | ANAR/RIDOX | 6.0 | -- | EHP | .5 | -- |
| Fluff, some hard polymer | 8.4 | AA | 45 | 3,300 | APE | 1.0 | ANAR/RIDOX | 6.0 | 70.4 | EHP | .5 | 3,350 |
| 55°C | | | | | | | | | | | | |
| Fluff | 8.9 | AA | 55 | 3,300 | APE | .5 | ANAR | 6.0 | 76.2 | EHP | 1.5 | 6,600 |
| Chunk | 8.9 | AA | 55 | 1,200 | APE | .5 | ANAR | 6.0 | 55.1 | EHP | 1.5 | -- |
| 65°C | | | | | | | | | | | | |
| Fluff | 8.4 | AA | 65 | 2,350 | APE | 1.0 | ANAR | 6.0 | 75.8 | EHP | .5 | 3,300 |
| Hard | 8.4 | AA | 65 | 1,500 | APE | 1.0 | ANAR | 6.0 | -- | EHP | .5 | -- |

EP 0 301 532 A2

### EXAMPLE II

Example II demonstrates the use of different chemical initiators; lauroyl peroxide (LP) as opposed to the di-2-(ethyl hexyl) peroxydicarbonate (EHP) used in Example I. At 65° C, as used for the experiment in Table II, EHP decomposes faster than does LPO. It is well known in the art that increasing the rate of initiation in acrylic monomer polymerizations leads to increased rate of polymerization accompanied by decreased molecular weight of the product polymer. In crosslinked copolymers of acrylic acid, molecular weights are difficult to measure, however, one still expects a change in the properties of the copolymer if, all else being equal, the rate of polymerization is altered by varying the initiation rate. For both experiments shown, the reaction time (6 hours) was sufficient to complete the polymerizations. The copolymers produced showed significant differences in thickening efficiency as expected.

Table II

| COMMENTS | WT. %<br>AA | MONOMER | RXN<br>° C | RXN<br>PRESS | CROSSLINKER | | COL GRADE | RXN<br>HOURS | % YIELD | CATALYST | | MUCILAGE<br>VISCOSITY |
|---|---|---|---|---|---|---|---|---|---|---|---|---|
| | | | | | TYPE | PHRM | | | | TYPE | PHRM | 0.2 WT. % |
| 65° C | | | | | | | | | | | | |
| Fluff* | 8.4 | AA | 65 | 2,350 | APE | 1.0 | ANAR | 6.0 | 75.8 | EHP | .5 | 3,300 |
| Fluff | 8.4 | AA | 65 | 2,000 | APE | 1.0 | ANAR/RIDOX | 6.0 | 72.8 | LP | .5 | 2,650 |

*From Table I

EP 0 301 532 A2

### EXAMPLE III

Example III illustrates how the properties of the fine fluffy powders produced may be altered by utilizing semi-batch (also called fed batch) addition of the crosslinking comonomer, allyl pentaerythritol APE). In the first experiment reported in Table III, all components were batch charged to the reactor and polymerization carried out for 4.5 hours as previously described. The resultant polymer exhibited a mucilage viscosity of 4850 cps. In the second reported experiment, only 1/3 of the amount of crosslinker to be eventually added was initially charged. The polymerization was begun and after 75 minutes a second 1/3 of the crosslinker was added without disturbing the polymerization in progress. The last 1/3 of the crosslinker was added 75 minutes later and the polymerization continued for a total time of 3.75 hours. The fluffy copolymer obtained exhibited a mucilage viscosity of 11600 cps. When the crosslinker was added according to the schedule 1/2 initially, 1/4 after 80 minutes of polymerization, and the final 1/4 after another 80 minutes interval with the polymerization continued for a total time of 4.0 hours, the fluffy copolymer exhibited a mucilage viscosity of 12550 cps. Other addition schedules for the crosslinker or alternatively for the monomer, or both, can reasonably be expected to yield similar differences in the product copolymer. The potential extension of semi-batch processing to continuous processing should be obvious to those skilled in the art of polymerization.

Table III

| COMMENTS | WT. % AA | MONOMER | RXN °C | RXN PRESS | CROSSLINKER | | COL GRADE | RXN HOURS | % YIELD | CATALYST | | MUCILAGE VISCOSITY |
|---|---|---|---|---|---|---|---|---|---|---|---|---|
| | | | | | TYPE | PHRM | | | | TYPE | PHRM | 0.2 WT. % |
| Batch Process | | | | | | | | | | | | |
| Fluff | 6.4 | AA | 55 | 1,800 | APE | .8 | ANAR | 4.5 | 71.6 | EHP | .5 | 4,850 |
| Semi-batch | | | | | | | | | | | | |
| Fluff | 6.4 | AA | 55 | 1,800 | APE | .8 | ANAR | 3.75 | 74.5 | EHP | .5 | 11,600 1/3, 1/3, 1/3 |
| Semi-batch | | | | | | | | | | | | |
| Fluff | 6.4 | AA | 55 | 1,800 | APE | .8 | ANAR | 4.0 | 76.7 | EHP | .5 | 12,550 1/2, 1/4, 1/4 |

EP 0 301 532 A2

### EXAMPLE IV

Fine fluffy powder acrylic acid copolymer suitable as a thickening agent can be produced when operating at a temperature in the sub-critical region. The example in Table IV was run at 27° C under conditions wherein two phases were present in the reactor during polymerization, a gas phase and a liquid phase. At 947 psia and 5 weight percent acrylic acid overall, the liquid phase contains less than 25 weight percent acrylic acid, the crosslinker, and the chemical initiator dissolved in liquid carbon dioxide. The gas phase contains carbon dioxide and some acrylic acid vapor. As polymerization proceeds, the acrylic acid in the gas phase repartitions to the liquid phase and is consumed to make polymer.

At this lower temperature, polymerization rates are expectedly slower and 19 hours was required to complete the reaction. The product, nevertheless, was a fine fluffy powder suitable as thickening agent.

EP 0 301 532 A2

Table IV

| COMMENTS | WT. % AA | MONOMER | RXN °C | RXN PRESS PSIG | CROSSLINKER | | COL GRADE | RXN HOURS | % YIELD | CATALYST | | MUCILAGE VISCOSITY | |
|---|---|---|---|---|---|---|---|---|---|---|---|---|---|
| | | | | | TYPE | PHRM | | | | TYPE | PHRM | 0.2 WT. % | 0.5 WT. % |
| Good Fluff | 5.0 | AA | 27 | 947 | APE | .95 | COL/RIDOX | 19.0 | 80.1 | EHP | 5.0 | 4,100 | 16,700 |

## EXAMPLE V

The data in Table V show the results of several reactions run at 55° C wherein the ratio of acrylic acid to the crosslinker was varied. Each of these polymerizations was run in a single supercritical fluid phase.

It is known in the art of making these thickening polymers that the thickening efficiency of the polymer produced is critically dependent upon the ratio of acrylic acid to crosslinker. If too little crosslinker is used, the polymer is insufficiently crosslinked and overswells thus limiting the mucilage viscosity. If too much crossliner is used, the resultant polymer is over-crosslinked and cannot swell enough to give good mucilage viscosity.

Because this is at best an inexact art, it is impossible to predict the optimum ratio of acrylic acid to crosslinker to give the most efficient possible thickening copolymer. This ratio depends in part on the nature of the solvent (in this case, carbon dioxide can be thought of as the solvent), the reaction temperature. and the chemical structure and functionality of the crosslinker chosen.

As a result, the optimum ratio for a given set of conditions and a particular solvent must be found by trial and error, typically with results like those shown in Table V.

Accordingly, it will be obvious to those skilled in the art of copolymerization that the kind and ratio of components included in the polymerization can be varied to change the properties of the fine fluffy powder acrylic acid copolymer thickening agents produced over a wide range of thickening efficiencies.

Table V

| COMMENTS | WT. % AA | MONOMER | RXN °C | RXN PRESS | CROSSLINKER | | COL GRADE | RXN HOURS | % YIELD | CATALYST | | MUCILAGE VISCOSITY |
|---|---|---|---|---|---|---|---|---|---|---|---|---|
| | | | | | TYPE | PHRM | | | | TYPE | PHRM | 0.2 WT. % |
| Fluff | 5.0 | AA* | 55 | 1,800 | APE | .40 | ANAR | 1.75 | 86.6 | EHP | 1.6 | 3,900 |
| Fluff | 5.0 | AA* | 55 | 1,800 | APE | .80 | ANAR | 1.5 | 90.6 | EHP | 1.6 | 4,800 |
| Fluff | 5.0 | AA* | 55 | 1,800 | APE | .95 | ANAR | 2.5 | 90.3 | EHP | 1.6 | 2,250 |
| Fluff | 5.0 | AA* | 55 | 1,800 | APE | 1.20 | ANAR | 2.0 | 90.5 | EHP | 1.6 | 2,450 |
| Fluff | 5.0 | AA* | 55 | 1,800 | APE | 1.40 | ANAR | 2.0 | 84.3 | EHP | 1.6 | 1,900 |

Thus it is apparent that there has been provided, in accordance with the invention, a method and a composition that fully satisfies the objects, aims, and advantages set forth above. While the invention has been described in conjunction with specific embodiments thereof, it is evident that many alternatives, modifications, and variations will be apparent to those skilled in the art in light of the foregoing description. Accordingly, it is intended to embrace all such alternatives, modifications, and variations as fall within the spirit and broad scope of the present invention.

## Claims

1. An improved acrylic acid type copolymer suitable for use as a thickening agent, the improvement comprising:
said acrylic acid type polymer being organic solvent free.

2. A method for making a solvent free acrylic acid type polymer suitable for use as a thickening agent, comprising the steps of:
charging into a reactor acrylic acid monomer, a comonomer, carbon dioxide, and a chemical initiator;
polymerizing said acrylic acid monomer with said comonomer at a preselected temperature and pressure to produce a fine, fluffy acrylic acid copolymer; and
separating totally and completely said acrylic acid copolymer from said carbon dioxide thus producing an organic solvent free acrylic acid polymer.

3. The method of claim 3, wherein said charging step is a batch process.

4. The method of claim 3, wherein said charging step is a continuous process.

5. The method of claim 4, wherein said comonomer is incrementally charged into said reactor over a period of time.

6. The method of claim 2, wherein said carbon dioxide is at least 99% by volume pure.

7. The method of claim 2, wherein said comonomer has at least two terminal allyl groups having the formula $H_2C = C \diagdown$ .

8. The method of claim 7, wherein said comonomer is one or more polyunsaturated hydrocarbons.

9. The method of claim 2, wherein from about 1 to about 20 parts of oxygen is charged into the reactor with said carbon dioxide.

10. The method of claim 2, wherein the amount of said chemical initiator ranges from about 0.25% to about 4% by weight based on the weight of said acrylic acid.

11. An acrylic acid copolymer suitable for use as a thickening agent comprising:
an acrylic acid polymer crosslinked with from 0.1 to about 6% by weight based upon the weight of said acrylic acid polymer of a copolymer, said copolymer having at least two terminal allyl groups having the formula $H_2C = C \diagdown$ .

12. The copolymer of claim 11, wherein said copolymer, at a 0.2 weight percent dispersed in distilled water, has a mucilage viscosity of at least 1000 cps.

LOCUS OF MAXIMA
(MIXTURE CRITICAL POINTS)

PRESSURE

WT % ACRYLIC ACID

TEMPERATURE

FIG. 1

FIG. 2